Europäisches Patentamt

European Patent Office

Office européen des brevets

(19)

(11) Veröffentlichungsnummer: **0 433 843 A2**

(12) **EUROPÄISCHE PATENTANMELDUNG**

(21) Anmeldenummer: 90123766.9

(22) Anmeldetag: 11.12.90

(51) Int. Cl.⁵: **A01K 87/00**, B44C 3/02, B29C 53/56, //B29L23:22, B29L31:52

(30) Priorität: 20.12.89 DE 3941954
15.05.90 DE 4015513

(43) Veröffentlichungstag der Anmeldung:
26.06.91 Patentblatt 91/26

(84) Benannte Vertragsstaaten:
BE DE FR GB IT NL

(71) Anmelder: D.A.M. DEUTSCHE ANGELGERÄTE MANUFAKTUR HELLMUTH KUNTZE GMBH & CO. KG
Industriestrasse 7
W-8820 Gunzenhausen(DE)

(72) Erfinder: Kuntze, Rupert
Ringstrasse 42
W-8827 Gräfensteinberg(DE)

(74) Vertreter: Richter, Bernhard, Dipl.-Ing. et al
Beethovenstrasse 10
W-8500 Nürnberg 20(DE)

(54) **Hohler Schaft sowie Verfahren zu seiner Herstellung.**

(57) Die Erfindung betrifft einen hohlen Schaft in Form eines Rutenkörpers für oder an Angelruten sowie für oder an Skistöcken, Golfschlägern und Surfmasten. Um ein mehrlagiges hohles Schaftmaterial (3, 3') aus mit Kunstharz getränktem Stoff ist ein Dekorträger (7, 7') herumgewickelt, der aus einem dünnen Vliesstoff oder Gewebe, z.B. Tüll, besteht und vom Kunstharz des Schaftmateriales getränkt ist. Der Dekorträger umgibt den Schaft nur mit einer Lage und erstreckt sich über die gesamte Oberfläche des Schaftes. Ferner betrifft die Erfindung Verfahrensmaßnahmen zur Herstellung eines solchen hohlen Schaftes.

Fig.8

EP 0 433 843 A2

## "HOHLER SCHAFT, SOWIE VERFAHREN ZU SEINER HERSTELLUNG"

Die Erfindung betrifft zunächst einen hohlzylindrischen oder hohlkonischen Schaft in Form eines Rutenkörpers für oder an Angelruten, oder als Schaft für oder an Skistöcken, Golfschlägern und Surfmasten, wobei der Schaft aus einem mehrlagigen Schaftmaterial aus mit Kunstharz getränktem Stoff und einer an seiner Außenseite vorgesehenen Dekoration besteht (Oberbegriff des Anspruches 1). Unter einem Rutenkörper versteht man sowohl die gesamte Angelrute, als auch bei aus mehreren Teilen zusammengesetzten Angelruten, deren einzelnen Teile. Die vorliegende Erfindung betrifft also sowohl Angelruten, die nur aus einem Rutenkörper bestehen als auch Angelruten, die aus mehreren, ineinandergesteckten oder teleskopartig oder sonstwie verbundenen Rutenkörpern zusammengesetzt sind. Das Material dieser Rutenkörper besteht aus einem stärkeren Gewebe, z. B. einem entsprechenden Glasfaser-oder Kohlefasergewebe. Bisher hat man relativ schmale Bänder aus einem unidirektionalen Kohlefaserband in Spiralen mit einer relativ großen Steigung um das mit Kunstharz getränkte Rutenkörpermaterial (Prepreg) herumgewickelt und beim Erhitzen zur Einleitung des Aushärteprozesses mit der dann flüssigen Polyester-, Phenol- oder Epoxydharztränkung des Rutenkörpermaterials durchdrungen. Ein erster Nachteil dieser vorbekannten Anordnung besteht zunächst darin, daß das exakte Aufbringen dieser Bänder in der gewünschten Spiralform fertigungstechnisch nicht einfach ist. Ungenauigkeiten in der Aufbringung ergeben ein ästhetisch nicht ansprechendes Bild und können auch zu Falten oder Rissen in den Bandern führen. Ein weiterer, wesentlicher Nachteil besteht ferner darin, daß diese Bänder selber kein Dekor aufweisen. Es wurde vielmehr, nach dem Aufbringen der Bänder, über die gesamte Außenfläche des Rutenkörpers eine Farbe gestrichen und dann überschliffen. An den am weitesten nach außen vorstehenden Teilen eines derartigen Rutenkörpers wurde die Farbe durch das Schleifen entfernt, während sie in den tieferen Teilen verblieb. Dies hatte eine gewisse, aber in der Ausdrucksweise sehr begrenzte Dekorwirkung, die außerdem durch die Spiralanordnung der Bänder in der Plazierung auf der Rutenkörperoberfläche festgelegt war. Gleiche bzw. ähnliche Nachteile ergaben sich bei vorbekannten Rutenkörpern, um die schmale Bänder aus einem Textil- oder Kunststoffgewebe gewickelt wurden, die in sich gemustert waren. Nach dem Umwickeln wurden diese Bänder lackiert. Zum einen ist dies eine Ausführung, die nicht unter den eingang angegebenen Oberbegriff des Anspruches 1 fällt. Außerdem bestehen hinsichtlich des Fertigungsaufwandes und der mangelhaften Dekorwirkung die bereits erläuterten Nachteile. Weder bei der letztgenannten noch bei der zuvor erläuterten vorbekannten Ausführung sind auf die Oberfläche des Rutenkörpers größere, in sich zusammenhängende Dekors oder Bilder aufbringbar. Hierzu hat man versucht, derartige Dekors auf dem Wege des Siebdruckes auf die Rutenkörperaußenfläche aufzudrucken.Ein solcher Druckvorgang ist aber bei dem relativ kleinen Durchmesser solcher Rutenkörper für Angelruten nicht oder nur unter sehr erschwerten Umständen durchführbar. Dies gilt bei den sehr kleinen Biegungsradien solcher Rutenkörper sowohl für den Siebdruck selber, als auch für das nach dem Siebdruck notwendige Rakeln, und auch für das Aufbringen von Abziehbildern in Form bedruckter Folien. Aus DE-OS 2804 474 ist es bekannt, um den Rutenkörper mehrere Lagen einer Folie zu wickeln, welche die gewünschten dekorativen Darstellungen aufweist. Diese Folie ist glasklar, so daß der Betrachter nicht nur die Darstellungen auf der obersten Wickellage, sondern auch die auf den darunter liegenden Wikkellagen der Folie sieht. Durch dieses Überlappen der Darstellungen der Wickellagen der Folie ist lediglich ein mehr oder weniger diffuses Dekor erreichbar. Es ist jedoch nicht möglich, hiermit klare, erkennbare Bilder, Schriften, Warenzeichen und dergleichen am Endprodukt deutlich sichtbar zu machen.

Schäfte gemäß dem eingangs angegebenen Oberbegriff des Anspruches 1 werden im Fall der Golfschläger mit Schlagteil und Handgriff, im Fall der Skistöcke mit der Stockspitze, Schneeteller und Handgriff verbunden, sowie im Fall der Surfmasten mit den notwendigen Befestigungsteilen für das Segel und die Montage des Mastes am Surfbrett versehen. Das Material dieser Schäfte besteht aus einem Wickel aus einem stärkeren Gewebe, z.B. einem entsprechenden Glasfaser- oder Kohlefasergewebe, das mit Kunstharz getränkt ist (sog. Prepreg). Der mit Kunstharz getränkte Wickel wird erhitzt, wodurch sich das Kunststoffmaterial (z.B. Polyester-, Phenol-oder Epoxydharztränkung) durch die Erhitzung aushärtet. Der Wickel selber ist zuvor um einen Dorn gewickelt worden, der nach dem Erhärten herausgezogen wird. Somit bilden das Wickelmaterial und das dieses durchdringende Kunststoffmaterial nach der Erhitzung und Aushärtung einen sehr festen, stabilen Schaft. Solche Schäfte werden bei Bedarf an ihrer Außenfläche mit einem aufgedruckten Dekor versehen, wobei dieses Dekor auch aus Texthinweisen und/oder dem Warenzeichen der Herstellerfirma und dergleichen mehr bestehen kann. Das vorgenannte Aufdrucken geschieht in der Regel auf dem Wege des Siebdruckes. Für solche Schäfte bestehen also im Prinzip die gleichen Nachteile, wie sie vorstehend zu den Rutenkörpern für Angelruten erläutert wurden.

Die Aufgabe der Erfindung besteht demgegenüber zunächst darin, einen Schaft gemäß dem eingangs angegebenen Oberbegriff des Anspruches 1 so auszubilden, daß er mit relativ geringem Fertigungsaufwand auf seiner gesamten Außenfläche ein Dekor aufweisen kann, wobei dieses Dekor deutlich und klar sichtbar sein soll.

Die Lösung dieser Aufgabe wird zunächst, ausgehend vom Oberbegriff des Anspruches 1, darin gesehen, daß ein die Dekoration beinhaltender Dekorträger um den Schaft herumgewickelt ist, daß dieser Dekorträger aus einem dünnen Vliesstoff oder Gewebe, z.B. Tüll, besteht, der bzw. das vom Kunstharz des Schaftmateriales getränkt ist und daß der Dekorträger ein Abschnitt von solcher Länge und Breite ist, daß er mit nur einer Lage die gesamte Oberfläche des Schaftes umgibt (kennzeichen des Anspruches 1). Ein solcher Dekorträger ist mit relativ geringen Herstellungskosten aufbringbar und mit dem Kunstharz des Schaftmaterials tränkbar. Hierzu wird auf den Anspruch 9 und dessen Erläuterung, sowie die sich daran anschließenden Ansprüche verwiesen. Da die gesamte Oberfläche (Außenfläche) des Schaftes mit dem Dekorträger bedeckt ist und beispielsweise keine spiralförmige Abschnitte der Oberfläche vom Dekorträgermaterial freibleiben, können auch größere Dekors, z. B. Bilder (aber auch schriftliche Hinweise, Werbung, Bedienungsanleitung, usw.) aufgebracht werden. Dies wäre im übrigen aus den genannten Gründen bei derart dünnen Schäften durch Siebdruck nicht oder nur mit einem nicht vertretbaren Herstellungsaufwand möglich. Vorstehendes gilt insbesondere für die Ausführungsform der Erfindung in Form einer Angelrute aus mehreren Rutenkörpern, deren Durchmesser sich vom Griff der Angelrute bis zu deren Spitze hin verjüngen. Beim äußersten, in der Rutenspitze endenden Rutenkörper wäre das vorbekannte Aufbringen eines Dekors mit Siebdruck überhaupt nicht mehr möglich. Auch wäre es hier sehr schwierig, die eingangs erläuterten Bänder korrekt und ohne Falten oder Risse spiralförmig um einen so dünnen Rutenkörperteil zu wickeln. Da nur eine Lage des Dekorträgers um den Schaftkörper herumgewickelt ist, kann man auf diesen Dekorträger größere Bilder, längere Schriftzüge (z.B. eine Bedienungsanleitung) und dergleichen aufbringen, die einwandfrei und klar erkennbar sind. Erwähnt sei ferner, daß ein solcher Vliesstoff, bzw. ein solches Gewebe, aufgrund seiner Struktur den Kunstharz oder dergleichen (Prepreg) des Materials des Rutenkörpers aufsaugen können und daher davon völlig durchtränkt und damit innig, praktisch einstückig, mit dem Material des Rutenkörpers verbunden sind. Die vorgenannten Vorteile gelten selbstverständlich auch für die Ausführung der Erfindung in Form eines Schaftes für Skistöcke, Golfschläger und Surfmasten.

Je nachdem, ob der betreffende Schaft eine zylindrische oder eine konische Form hat, ergibt sich als Zuschnitt des Dekorträgers ein Rechteck oder ein Trapez gem. Anspruch 2 bzw. 3.

Aus Fertigungsgründen empfiehlt sich in der Regel, daß nur ein Dekorträger vorgesehen ist, dessen Länge gleich der Schaftlänge ist. In Sonderfällen und insbesondere bei längeren Schäften kann man aber, falls erwünscht oder zweckmäßig, anstatt eines einzigen Dekorträgers auch zwei oder mehrere in Schaftrichtung hintereinander angeordnete Dekorträger vorsehen (Anspruch 4).

Schließlich empfiehlt sich eine geringfügige Überlappung gemäß Anspruch 5, um unter Umständen unschöne Stoßkanten oder sogar kleine Zwischenräume an einander gegenüberliegenden Längsseiten des Dekorträgers zu vermeiden.

Die Merkmale des Anspruches 6 beinhalten entweder geradlinige Überlappungen oder, falls eine entsprechende, sogenannte optische Auflösung gewünscht wird, gezackt, gewellt oder dergleichen verlaufende Kanten der Überlappung. Im letztgenannten Fall sind die sich überlappenden Kanten nicht so gut sichtbar wie im erstgenannten Fall.

Mit den Merkmalen des Anspruches 7 wird ein Schutz des Dekorträgers gegen Beschädigungen oder Verschmutzung erreicht, wobei aber diese Glasfaserschicht glasklar ist, d.h. ein ungehindertes Betrachten des Dekors ermöglicht.

Die Merkmale des Anspruches 8 passen die Anbringung dieser Glasfaserschicht der Art der Anbringung des Dekorträgers an, wodurch sich die Fertigung erleichtert und verbilligt.

Die Erfindung betrifft ferner ein Verfahren zur Herstellung eines hohlen, zylindrischen oder konischen Schaftes in Form eines Rutenkörpers für oder an Angelruten, oder als Schaft für Skistöcke, Golfschläger und Surfmasten wobei zunächst um einen Kern mehrere Lagen eines mit Kunstharz oder dergleichen getränkten, aus einem Stoff bestehenden Schaftmaterials gewickelt (Prepreg) wird, dann um das Schaftmaterial eine Halterung, bevorzugt in Spiralform ein Zellophanband, aufgebracht wird, anschließend eine die Kunstharztränkung der Prepreg zum Schmelzen bringende Wärmebehandlung erfolgt und danach die Halterung und der Kern entfernt werden (Oberbegriff des Anspruches 9).

In dieser Weise wurden die zum Stand der Technik bereits geschilderten Rutenkörper mit in Spiralform auf das Rutenkörpermaterial gewickelten Bändern aus unidirektionalem Kohlefaserband versehen. Diese Bänder wurden nach ihrem Umwickeln mit der Halterung, z. B. Cellophanbändern umgeben. Danach wurde der gesamte Rutenkörper, einschließlich Bänder und Halterung, erhitzt, worauf die Tränkung aus Kunstharz oder dergleichen des z. B. aus zwei bis sieben Wickellagen bestehenden Rutenkörpermaterials flüssig wurde und - soweit als möglich - auch diese Bänder durchtränkte. Nach erfolgter Abkühlung wurde die Halterung, z. B. die genannte Cellophanumhüllung, entfernt, sowie der Kern herausgezogen. Die Cellophanbänder hatten beim Verflüssigen der Kunstharztränkung an der Außenfläche des Rutenkörpermaterials, bzw. der Bänder kleine Abstufungen gebildet, die durch Schleifen entfernt wurden.

Die Nachteile derartiger Rutenkörper für Angelruten und auch deren Herstellung sind eingangs bereits erläutert worden. Ähnlich wurden die zum Stand der Technik ferner erläuterten Schäfte für Skistöcke, Golfschläger und Surfmaste hergestellt und mit einem Dekor versehen. Auch dabei ergaben sie die bereits geschilderten Nachteile.

Verfahrensmäßig besteht demgegenüber die Aufgabe, ein Verfahren gemäß dem vorstehend angegebenen Oberbegriff des Anspruches 9 dahingehend zu gestalten, daß bei Erzielung eines einwandfreien, die gesamte Außenfläche des Schaftmaterials bedeckenden Dekors die Herstellung sehr einfach und damit kostengünstig ist.

Die Lösung dieser Aufgabe wird, zunächst ausgehend vom Oberbegriff des Anspruches 9, darin gesehen, daß nach dem Verfahrensabschnitt der Wicklung und Tränkung des Schaftmaterials entweder bei Herstellung eines hohlen, konischen Schaftes ein Dekorträger von trapezförmigem Zuschnitt, oder bei Herstellung eines hohlzylindrischen Schaftes ein Dekorträger von rechteckigem Zuschnitt jeweils in Umfangsrichtung des Schaftes um dessen Außenfläche mit nur einer Windung gewickelt wird, wobei die Zuschnitte der Dekorträger derart dimensioniert sind, daß sie in Umfangs- und Wickelrichtung so lang wie der Umfang des Schaftes sind, gegebenenfalls zuzüglich einer relativ kurzen Überlappung, daß der Dekorträger aus einem das flüssige Kunstharz des Prepreg aufsaugenden, dünnen Vliesstoff oder Gewebe, z.B. Tüll, besteht und daß diese Aufnahmefähigkeit an flüssigem Kunstharz des Vliesstoffes oder Gewebes einerseits und der sich verflüssigende, für das Aufsaugen zur Verfügung stehende Anteil an Kunstharz des Prepreg so aufeinander abgestimmt sind, daß der Vliesstoff oder das Gewebe von dem verflüssigtem Kunstharz vollständig durchtränkt werden (Kennzeichen des Anspruches 9). Da der Zuschnitt des Dekorträgers vor seiner Anbringung am Schaft feststeht und er diesen Schaft nur mit einer Windung umgibt, kann das Dekor, das auf dem Dekorträger bereits vor seiner Anbringung am Schaft vorgesehen ist, exakt auf die Abmessungen des betreffenden Schaft ausgerichtet werden. Das Aufwickeln in Umfangsrichtung ist fertigungstechnisch sehr einfach, z.B. wesentlich einfacher als ein Aufwickeln eines Bandes in Spiralform, das bei den vorbekannten Rutenkörpern vorgesehen war.

Die Verfahrensmerkmale nach Anspruch 10 befassen sich mit der Anbringung einer Glasfaserschicht und deren Tränkung während des Erhitzungsprozesses durch das verflüssigte Kunststoffmaterial des sogenannten Prepreg. Die so getränkte Glasfaserschicht ist (siehe oben) in sich glasklar. Von fertigungstechnischem Vorteil ist, daß ihre Tränkung und die des Dekorträgers durch das verflüssigte Kunststoffmaterial des Prepreg in einem Arbeitsgang erfolgt.

Schließlich empfiehlt es sich, gemäß Anspruch 11 vorzugehen. Dies reduziert nicht nur die Herstellungskosten, in dem für jeden Schaft, z.B. jeden Rutenkörper nur einmal eine Umwickelung des Schaftmaterials mit einem solchen Dekorträger und gegebenenfalls Glasfaserschicht vorgenommen werden muß. Außerdem kann somit ein sich über die gesamte Länge des Schaftes erstreckendes Bild, Schriftaufdruck oder dergleichen am Dekorträger vorgesehen werden.

Die vorstehend erläuterten und beanspruchten Verfahrensschritte sind bevorzugte Ausführungsformen der Erfindung zur Herstellung eines solchen Schaftes.

Weitere Vorteile und Merkmale der Erfindung sind der nachstehenden Beschreibung und der zugehörigen Zeichnung von erfindungsgemäßen Ausführungsmöglichkeiten zu entnehmen. In der Zeichnung zeigt:

Fig. 1:      einen konisch zulaufenden Schaft,

Fig. 2:      den zugehörigen Zuschnitt der Wicklung des Schaftmaterials,

Fig. 3:      den zugehörigen Zuschnitt des Dekorträgers,

Fig. 4:      einen zylindrischen Schaft,

Fig. 5:      den zugehörigen Zuschnitt des Schaftmaterialsk

Fig. 6:      den zugehörigen Zuschnitt des Dekorträgers,

Fig. 7:      im vergrößerten Maßstab einen Querschnitt durch den fertigen Schaft,

Fig. 8:      den Querschnitt gemäß Fig. 7, jedoch mit Kern und äußerer Halterung,

Fig. 9, 10:      Querschnitte gemäß Fig. 7, 8, jedoch mit einer zusätzlichen Glasfaserschicht,

Fig.11:      je eine Ausführungsform der Erfindung anhand a,b,c: eines Surfmastes (a), eines Skistockes (b) und eines Golfschlägers (c).

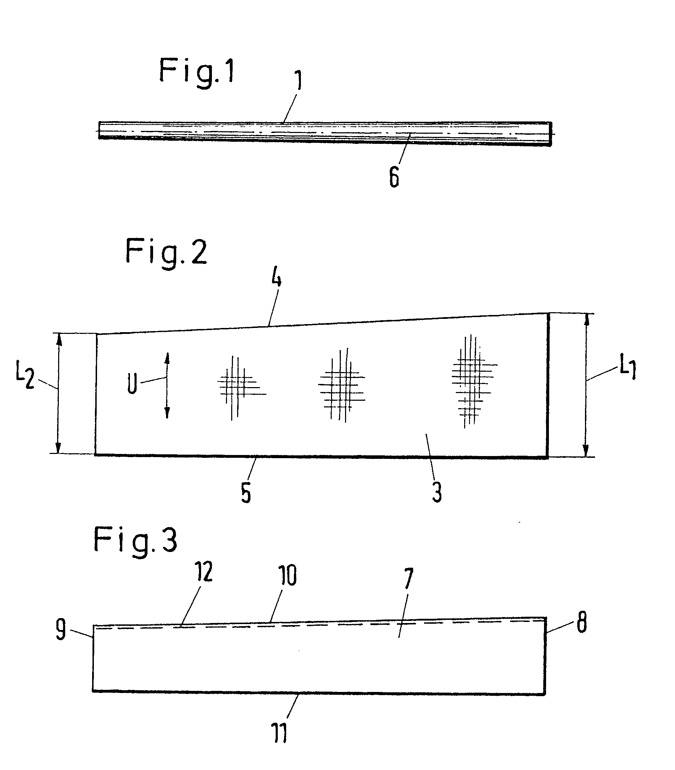

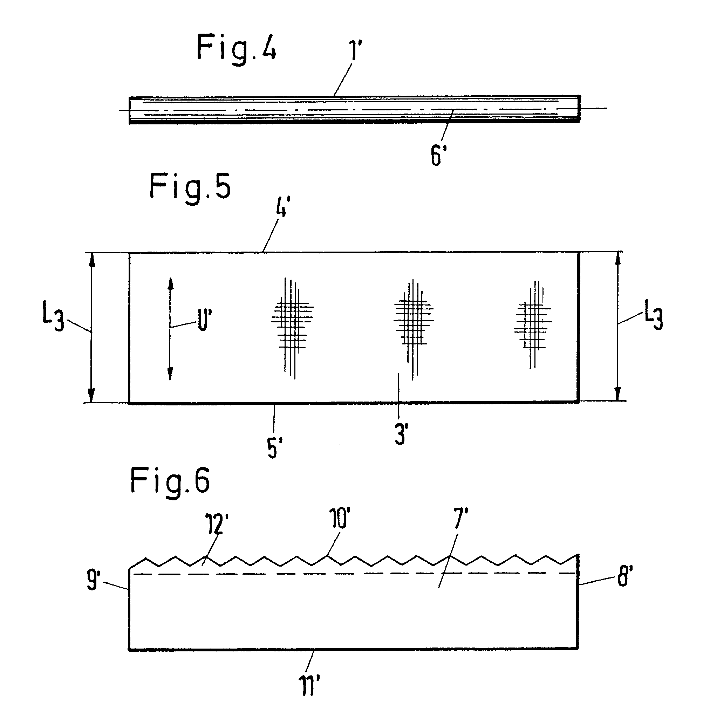

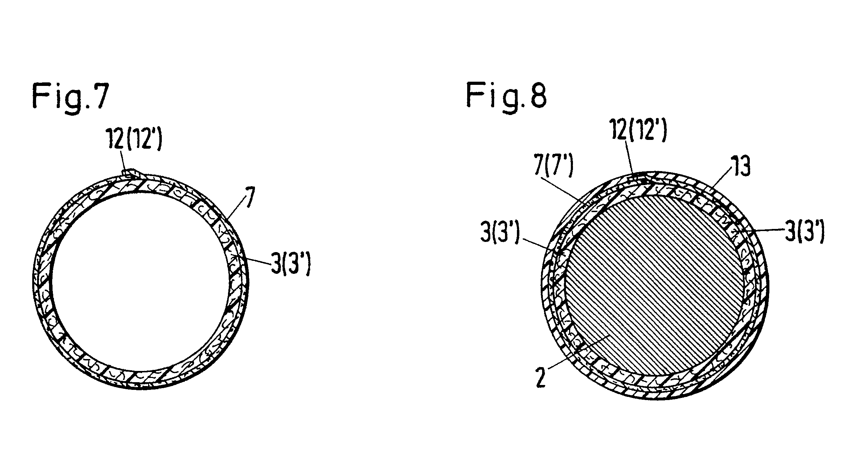

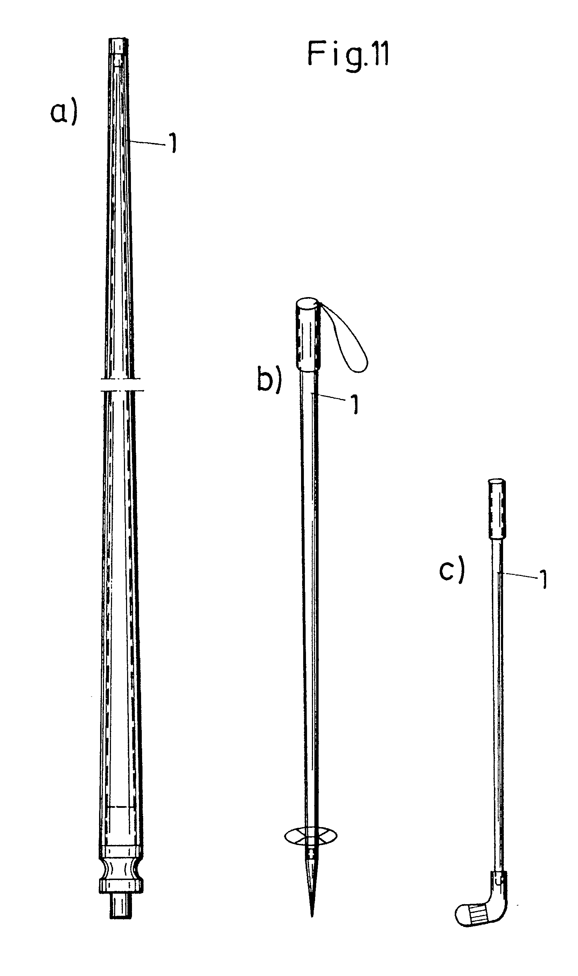

Ein konischer hohler Schaft 1 bzw. ein zylindrischer hohler Schaft 1' wird gemäß der Fig. 8 oder 10 so gebildet, daß um einen entsprechend geformten Kern 2 eine mehrlagige Wicklung 3 aus einem mit Kunstharz getränkten Stoff gewickelt wird. Aus Gründen der zeichnerischen Vereinfachung sind in den Fig. 7 - 10 die einzelnen Lagen der Wicklung 3 nicht für sich dargestellt. Der vorgenannte Stoff kann ein entsprechend starkes Textil- oder Kunststoffgewebe oder ein Glasfaser- oder Kohlenfasergewebe sein. Der Zuschnitt dieses Stoffes ist zur Herstellung eines konischen Schaftes gemäß Ziffer 3 in Fig. 2 trapezförmig (bzw. zur Herstellung eines zylindrischen Schaftes gemäß Ziffer 3' (Fig. 5) rechteckig). Die Länge $l_1$ bzw. $l_2$ der schmalen Kanten des Trapezes sind so gewählt, daß die gewünschte Anzahl von Wickellagen aufgebracht werden kann. Die Differenz $l_1$, $l_2$ und damit die Neigung der einen Längsseite 4 zur anderen Längsseite 5 sind der Konizität des Schaftes 1 derart angepaßt, daß nach Umwickelung des Kernes 2 die Längskanten 4, 5 parallel zur Mittellängsachse 6 des Schaftes verlaufen. Das gleiche gilt für den Dekorträger 7, der einen entsprechenden konischen Zuschnitt hat. Nur sind die Längen der Schmalseiten 8, 9 so gewählt, daß nach nur einmaliger Umwickelung des von der Wicklung 3 gebildeten Schaftmaterials die Längsseiten 10, 11 entweder aneinander stoßen oder gemäß einer bevorzugten Ausführungsform der Erfindung sich gemäß Ziffer 12 in den Fig. 7, 8 etwas überlappen. Die Länge der Überlappung 12 kann 1 mm betragen. Der Dekorträger 7 besteht aus einem Vliesstoff oder einem Gewebe, z.B. einem Tüll, der bzw. das relativ dünn und in der Lage ist, den verflüssigten Kunstharz des Stoffes 3 bei der nachstehend näher zu erläuternden Erhitzung in sich aufzusaugen.

Im Ausführungsbeispiel der Fig. 4 - 6 sind die gleichen Ziffern wie im Beispiel der Fig. 1 - 3, zuzüglich eines Beistriches, gewählt. Die schmalen Seiten des Stoffes des Schaftmaterials 3' haben die gleiche Länge $l_3$. Das gleiche gilt für die Längen der schmalen Seiten 8' und 9' des am Schaft nur eine Windung bildenden Dekorträgers 7', der ebenfalls aus einem Vliesstoff oder Gewebe (siehe oben) besteht. Da in diesem Beispiel der herzustellende Schaft 1' zylindrisch ist, verlaufen somit ebenfalls die Längsseiten 4', 5, und 10', 11' der Teile 3', 7' nach Fertigstellung des Schaftes 1' parallel zu seiner Längsmittelachse 6'.

Anschließend wird eine lediglich in Fig. 8 schematisch dargestellte Halterung in Form eines spiralförmig aufgewickelten Zelluloidbandes 13 aufgebracht, wobei sich die einzelnen Windungen dieser Spirale etwas überlappen. Anschließend wird der Schaft mit Kern 2 und Halterung 13 soweit erhitzt, daß die Kunstharztränkung der Wicklungen (Prepreg) 3, bzw. 3' flüssig werden und auch den Vliesstoff oder das Gewebe des Dekorträgers 7 bzw. 7' durchtränken. Die Dünnheit des Gewebes oder Vliesstoffes und die bei dem vorstehenden Erhitzungsvorgang freiwerdende und während der Erhitzung flüssige Menge der Kunstharztränkung der Wicklungen 3, 3' sind so aufeinander abgestimmt, daß der Kunstharzüberschuß aus dem Prepreg ausreicht, um den Vliesstoff oder das Gewebe vollständig zu durchtränken. Dabei hat sich besonders die Verwendung eines Vliesstoffes als geeignet erwiesen, weil die den Vliesstoff bildenden Fäden ungeordnet, d.h. nicht gerade gerichtet sind und der Vliesstoff somit eine besonders starke Saugfähigkeit für das flüssige Kunstharz besitzt. Beispielsweise wird ein Vliesstoff mit einer Dicke von 0,3 mm verwendet. Diese Angabe ist aber nur als beispielhaft gegeben, d.h. die Erfindung ist nicht auf diese Zahlenangabe beschränkt. Nach dieser Tränkung erfolgt die Abkühlung, und der Kern 2 wird herausgezogen und die Halterung 13 entfernt. Etwa sich durch die Wicklungen der Halterung 13 auf der Außenfläche des Dekorträgers 7 bzw. 7' gebildeten spiralförmigen umlaufenden Kanten werden abgeschliffen.

Wie die Fig. 1 bis 3 und 4 bis 6 zeigen, ist die Gesamtlänge der Teile 3, 7 bzw. 3', 7' gleich der Gesamtlänge des zugehörigen Schaftes 1, bzw. 1'. Die Wickelrichtung der Teile 3, 7 bzw. 3', 7' ist in der Umfangsrichtung U bzw. U', und zwar bevorzugt unter Bildung der bereits erläuterten Überlappung 12 bzw. 12', die in den Fig. 3 und 6 durch eine gestrichelte Linie angedeutet ist. Die sich überlappenden Längsseiten der Dekorträger können entweder gemäß Ziffer 10, 11 in Figur 3 gradlinig oder, gemäß den Ziffern 10', 11' in Figur 6 gezackt, oder auch gewellt sein. Im letztgenannten Fall ergibt sich eine bessere optische Auflösung, d.h., die überlappten Ränder sind nicht so deutlich zu erkennen wie im Ausführungsbeispiel der Fig. 3.

Das Endprodukt ist ein Schaft, bei welchem durch die Kunstharztränkung der Dekorträger und das Schaftmaterial absolut fest miteinander verbunden sind, wobei aufgrund der Verwendung der Halterung in Form eines Cellophanbandes während des Erhitzens Schaftmaterial und Dekorträger zusammengedrückt wurden. Im Ergebnis ist der in Fig. 7 gezeigte Schaft im Querschnitt in sich einstückig, wobei das Dekor des Trägers von außen einwandfrei zu erkennen ist und den gewünschten Effekt gibt. Der Dekorträger umgibt mit dem Dekor die gesamte Außenfläche des Schaftes.

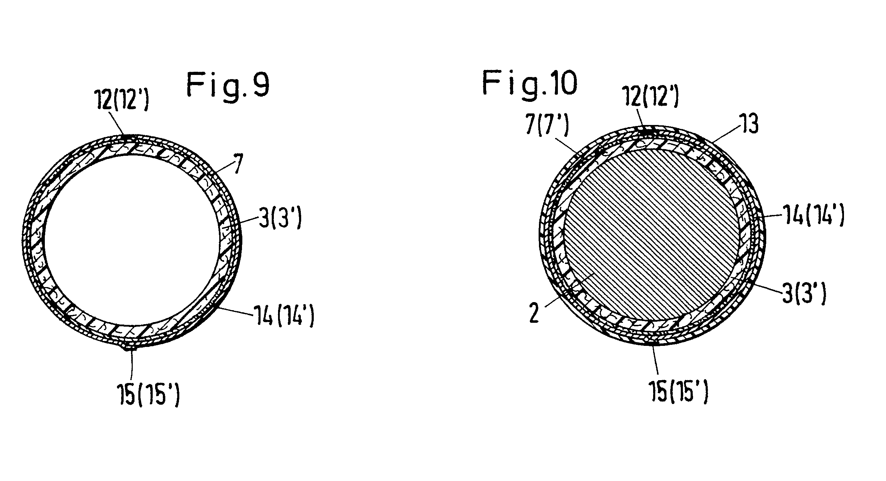

Fig. 9 und 10 zeigen eine weitere Ausgestaltung der Erfindung mit einer Glasfaserschicht 14 bzw. 14', welche den jeweiligen Dekorträger 7 bzw. 7' umgibt und beim erläuterten Erhitzungsvorgang ebenfalls mit dem flüssigen Kunstharz des Prepreg durchtränkt wird. Sofern diese Glasfaserschicht vorgesehen ist, muß also dafür gesorgt werden, daß die freiwerdende flüssige Menge an Kunstharz ausreicht, um zusätzlich zum Dekorträger auch die Glasfaserschicht zu durchtränken. Eine so durchtränkte Glasfaserschicht ist glasklar. Das Dekor ist durch sie hindurch einwandfrei sichtbar. Die Glasfaserschicht 14 bzw. 14' schützt aber den Dekorträger vor Verschmutzung und/oder Beschädigung. Herstellungsmäßig wird bevorzugt so vorgegangen, daß die Glasfaserschicht 14 bzw. 14' den gleichen Zuschnitt wie der zugehörige Dekorträger 7 bzw. 7' (siehe Fig. 3 und 6) hat. Nach dem Umwickeln des Dekorträgers 7 bzw. 7' wird die entsprechende Glasfaserschicht auf den Dekorträger gewickelt, wobei sie bevorzugt ebenfalls eine entsprechende Überlappung 15 bzw. 15' an ihren Längskanten hat. Dann wird die Halterung 13 aufgebracht und das vorstehend erläuterte Verfahren durchgeführt.

Die vorstehenden Ausführungsbeispiele betreffen sowohl die Herstellung von Rutenkörpern an oder für Angelruten, wobei diese Rutenkörper entweder eine konische Außenform gemäß Fig. 1 oder eine zylindrische Außenform gemäß Fig. 4 haben können. Ebenfalls gemäß den vorstehenden Ausführungsbeispielen können Schäfte für Surfmaste, Skistöcke oder Golfschläger hergestellt werden, die dann mit den zugehörigen Teilen des Surfmastes bzw. des Surfbrettes, des Skistockes und des Golfschlägers versehen bzw. verbunden werden, was beispielsweise durch Verklebung geschehen kann. So zeigt im wesentlichenschematisch Fig. 11a anhand des Schaftes 1 eines Surfmastes, Fig. 11b anhand de, Schaftes 1 eines Skistockes und Fig. 11c anhand des Schaftes 1 eines Golfschlägers, wie jeweils an dem betreffenden Schaft 1 ein Stutzen zur Befestigung am Surfbrett, oder Skispitze und Handgriff, oder Golfschlagteil und Handgriff angebracht sind.

**Ansprüche**

1. Hohlzylindrischer oder hohlkonischer Schaft in Form eines Rutenkörpers für oder an Angelruten, oder als Schaft für oder an Skistöcken, Golfschlägern und Surfmasten, wobei der Schaft aus einem mehrlagigen Schaftmaterial aus mit Kunstharz getränktem Stoff und einer an seiner Außenseite vorgesehenen Dekoration besteht, dadurch gekennzeichnet, daß ein die Dekoration beinhaltender Dekorträger (7, 7') um den Schaft herumgewickelt ist, daß dieser Dekorträger aus einem dünnen Vliesstoff oder Gewebe, z.B. Tüll, besteht, der bzw. das vom Kunstharz des Schaftmaterials getränkt ist, und daß der Dekorträger ein Abschnitt von solcher Länge und Breite ist, daß er mit nur einer Lage die gesamte Oberfläche des Schaftes (3, 3') umgibt.

2. Schaft nach Anspruch 1, dadurch gekennzeichnet, daß bei konischer Form des Schaftes (1) der Zuschnitt des Dekorträgers (7) trapezförmig ist, wobei die Neigung der einen Längsseite (10) des Trapezes zur anderen Längsseite (11) so gewählt ist, daß nach Aufwicklung des Dekorträgers die aneinanderstoßenden oder überlappenden Längsseiten (10, 11) des Zuschnittes parallel zur Längsmittelachse (6) des Schaftes verlaufen.

3. Schaft nach Anspruch 1, dadurch gekennzeichnet, daß bei einer zylindrischen Form des Schaftes (1') der Dekorträger (7') einen rechteckigen Zuschnitt hat, wobei die Längsseiten (10', 11') des aufgewickelten Dekorträgers (7') parallel zur Längsmittelachse (6') des Schaftes (1') verlaufen.

4. Schaft nach einem der Ansprüche 1 bis 3, dadurch gekennzeichnet, daß sich über die gesamte Schaftlänge erstreckend entweder ein Dekorträger, oder mehrere in Schaftlängsrichtung hintereinander angeordnete Dekorträger vorgesehen ist, bzw. sind.

5. Schaft nach einem der Ansprüche 1 bis 4, dadurch gekennzeichnet, daß sich in Umfangsrichtung (U, U') die Längsseiten (10, 11; 10', 11') des jeweiligen Dekorträgers etwas überlappen (12, 12'), z.B. etwa 1 mm beträgt.

6. Schaft nach Anspruch 4 oder 5, dadurch gekennzeichnet, daß die sich überlappenden Längsseiten (10, 11; 10', 11') entweder gradlinig (10, 11) oder ungleichmäßig, z.B. zackenförmig (10', 11'), wellenförmig oder dergleichen ausgebildet sind.

7. Schaft nach einem der Ansprüche 1 bis 6, dadurch gekennzeichnet, daß der Dekorträger (7, 7') von einer transparenten, mit Kunstharz durchtränkten Glasfaserschicht (14, 14') umgeben ist, wobei das Kunstharz Dekorträger und Glasfaserschicht miteinander innig verbindet.

8. Schaft nach Anspruch 7, dadurch gekennzeichnet, daß die Glasfaserschicht (14, 14') den gleichen Zuschnitt wie der zugehörige Dekorträger (7, 7') aufweist und bevorzugt an ihren Längskanten ebenfalls geringfügig überlappt ist (15, 15').

9. Verfahren zur Herstellung eines hohlen, zylindrischen oder konischen Schaftes in Form eines Rutenkörpers für oder an Angelruten, oder als Schaft für Skistöcke, Golfschläger und Surfmasten, wobei zunächst um einen Kern mehrere Lagen eines mit Kunstharz oder dergleichen getränkten, aus einem Stoff bestehenden Schaftmaterials gewickelt (Prepreg) wird, dann um das Schaftmaterial eine Halterung, bevorzugt in Spiralform ein Zellophanband, aufgebracht wird, anschließend eine die Kunstharztränkung des Prepreg zum Schmelzen bringende Wärmebehandlung erfolgt und danach die Halterung und der Kern entfernt werden, dadurch gekennzeichnet, daß nach dem Verfahrensabschnitt der Wicklung und Tränkung des Schaftmaterials entweder bei Herstellung eines hohlen, konischen Schaftes (1) ein Dekorträger (7) von trapezförmigem Zuschnitt, oder bei Herstellung eines hohlzylindrischen Schaftes (1') ein Dekorträger (7') von rechteckigem Zuschnitt jeweils in Umfangsrichtung (U, U') des Schaftes (1, 1') um dessen Außenfläche mit nur einer Windung gewickelt wird, wobei die Zuschnitte der Dekorträger derart dimensioniert sind, daß sie in Umfangs- und Wickelrichtung so lang wie der Umfang des Schaftes sind, gegebenenfalls zuzüglich einer relativ kurzen Überlappung (12, 12'), daß der Dekorträger aus einem das flüssige Kunstharz des Prepreg aufsaugenden, dünnen Vliesstoff oder Gewebe, z.B. Tüll, besteht und daß diese Aufnahmefähigkeit an flüssigem Kunstharz des Vliesstoffes oder Gewebes einerseits und der sich verflüssigende, für das Aufsaugen zur Verfügung stehende Anteil an Kunstharz des Prepreg so aufeinander abgestimmt sind, daß der Vliesstoff oder das Gewebe von dem verflüssigten Kunstharz vollständig durchtränkt werden.

10. Verfahren nach Anspruch 9, dadurch gekennzeichnet, daß eine Glasfaserschicht (14, 14') auf den Dekorträger (7, 7') gewickelt, danach die Halterung (13) aufgebracht und die Wärmebehandlung durchgeführt wird, wobei der freiwerdendeKunstharz des Prepreg so bemessen ist, daß er zusätzlich zum Dekorträger auch die Glasfaserschicht durchtränkt.

11. Verfahren nach Anspruch 9 oder 10, dadurch gekennzeichnet, daß pro Schaft nur ein Dekorträger (7, 7') und gegebenenfalls nur eine Glasfaserschicht (14, 14') mit einer Länge gewickelt wird, welche der Länge des Schaftes (1, 1') entspricht.

Fig.1

Fig.2

Fig.3

Fig.4

Fig.5

Fig.6

EP 0 433 843 A2

# Fig.7

12(12')
7
3(3')

# Fig.8

12(12')
7(7')
13
3(3')
3(3')
2

EP 0 433 843 A2

## Fig.9

12(12')
7
3(3')
14 (14')
15(15')

## Fig.10

12(12')
7(7')
13
14(14')
3(3')
2
15(15')

Fig.11

a)

1

b)

1

c)

1